# EUROPEAN PATENT APPLICATION

(11) **EP 3 702 704 A1**
(43) Date of publication of application: **02.09.2020**
(21) Application number: 20156260.0
(22) Date of filing: 07.02.2020
(51) Int. Cl.: F25D 21/04

(54) **HYDROPHOBIC COATING ON EVAPORATOR FAN BLADE TO ENHANCE FOOD PRESERVATION**

(30) Priority: 28.02.2019 US 201916289099
(71) Applicant: Whirlpool Corporation, Benton Harbor, MI 49022 (US)
(72) Inventor: Olivani, Andrea, 21024 Cassinetta di Biandronno (VA) (IT); Parnisari, Matteo, 21024 Cassinetta di Biandronno (VA) (IT); Pirovano, Maria Paola, 21024 Cassinetta di Biandronno (VA) (IT)
(74) Representative: Spina, Alessandro

(57) **Abstract**

A refrigerator (2) includes a fresh food compartment (8), a freezer compartment (13) and a refrigeration system (59) a freezer evaporator (60) and an evaporator fan (10) configured to direct a flow of cooling air over the freezer evaporator (60) and into at least the fresh food compartment (8), wherein the evaporator fan (100) includes at least one blade (104), with the at least one fan blade (104) having an outer surface (110) provided with a hydrophobic coating (108) to reduce dehydration of food items in the fresh food compartment (8).

## Description

### BACKGROUND OF THE INVENTION

### Field of the Invention

The present invention pertains to the art of refrigerators and, more particularly, to enhancing the preservation of food stored in the refrigerator through air flow control.

### Description of the Related Art

In general, a refrigerator will include one or more compartments used to store food items and a refrigeration system for cooling each compartment. A domestic refrigerator typically includes both a fresh food compartment for storing food items at a temperature above freezing and a freezer compartment for storing food items below freezing. Although separate refrigeration systems could be employed for each compartment, it is more common and economical to employ a single refrigeration system, along with an assembly to regulate and control the flow of cooling air to each of the compartments based on desired operating temperatures. A refrigeration system of this type mainly includes a compressor, a condenser and a condenser fan located in a machine compartment of the refrigerator, as well as an evaporator and evaporator fan located in or directly exposed to the freezer compartment. When a control system indicates that cooling is required in one or more of the compartments, the refrigeration system is activated, resulting in the evaporator becoming quite cold and the evaporator fan causing a flow of air to flow across the evaporator to create a flow of cold air which is then directed to the compartment(s) requiring cooling. The refrigeration system remains in operation until the cooling requirement of the compartment(s) is met.

In some types of refrigerators, the flow of cooling air is always directed into the freezer compartment and then at least some of the flow is diverted to the fresh food compartment, such as through an air flow duct having a flow regulating baffle. In other types of refrigerators, separate or comingled air flow ducting is employed for direct air flow to each compartment. In each case, the overall cooling system can be employed in a wide variety of refrigerator models, including top mount, bottom mount, side-by-side and French style refrigerators. In the situations where the cold air generated for the freezer is directed into the fresh food compartment for cooling food items in the fresh food compartment, the cold air entering the fresh food compartment typically has a low humidity level (very dry). This is particularly true in full no-frost refrigerator systems with a single evaporator located in the freezer compartment (perhaps behind a false rear wall such that any developed condensed water droplets (ice) are not visible) where ducts are employed to circulate cooling air to each compartment, with the cooling air for the fresh food compartment coming either directly from the freezer evaporator or from freezer compartment. In either case, when this dry air enters the fresh food compartment, the air extracts humidity from the fresh food in the compartment, thereby contributing to food dehydration which can have a significant negative impact on the overall appearance and shelf life of the food, as well as reducing the preservation performance of the refrigerator overall.

With the above in mind, there is seen to be a need in the art for a refrigeration system that can be utilized with various refrigerator configurations having freezer evaporators, wherein the system compensates for a dehydration effect created when a supply of air is directed across the freezer evaporator and directed into a fresh food compartment of the refrigerator.

### SUMMARY OF THE INVENTION

The present invention is directed to a refrigerator including a fresh food compartment and a freezer compartment, as well as a refrigeration system including a freezer evaporator and an evaporator fan configured to direct a flow of air over the freezer evaporator and into the fresh food compartment. The evaporator fan includes at least one blade, with the at least one fan blade having an outer surface including a hydrophobic coating.

When the refrigeration system is used in a cooling cycle, the evaporator becomes cold and operation of the evaporator fan causes a flow of cooling air to be directed over the evaporator and then into the fresh food compartment for cooling food items stored in the fresh food compartment, with the cold air coming either directly from the across the evaporator or through ducting from the freezer compartment. In either case, the inclusion of the hydrophobic coating operates to reduce dehydration of the food items in the fresh food compartment by limiting the loss of humidity in the cold air supply.

Additional objects, features and advantages of the present invention will become more readily apparent from the following detailed description of preferred embodiments when taken in conjunction with the drawings wherein like reference numerals refer to corresponding parts in the several views.

### BRIEF DESCRIPTION OF THE DRAWINGS

Figure 1 is a perspective view of a refrigerator including an air flow system according to the present invention;
Figure 2 is a cross-sectional view of the refrigerator of Figure 1; and
Figure 3 is a cross-sectional view of a fan blade of the air flow system.

### DETAILED DESCRIPTION OF PREFERRED EMBODIMENTS

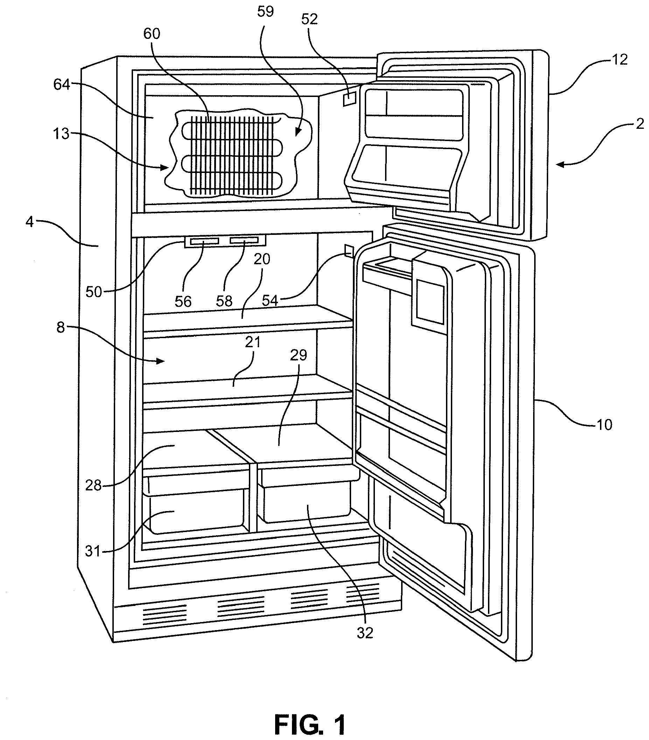

With initial reference to Figure 1, a refrigerator 2 includes an outer shell or cabinet 4 within which is positioned a liner (not separately labeled) that defines a fresh food compartment 8. In a manner known in the art, fresh food compartment 8 can be accessed by the selective opening of a fresh food door 10. In a similar manner, a freezer door 12 can be opened to access a freezer compartment 13. For the sake of completeness, fresh food door 10 and freezer door 12 of refrigerator 2 are shown with storage zones (not separately labeled) for supporting various food items in a manner widely known in the art. As is also known in the art, fresh food compartment 8 is shown provided with a plurality of shelves 20 and 21, which are preferably vertically height adjustable. At a lowermost portion of fresh food compartment 8 is illustrated various laterally spaced shelves 28 and 29 below which are positioned spaced bins 31 and 32, respectively. Certainly, the above described refrigerator style and structure are known in the art (generally referred to as a top-mount refrigerator) and presented only for the sake of completeness. At this initial point, it should be noted that the present invention is not limited for use with a top-mount style refrigerator, but may be utilized with other known refrigerator styles including bottom-mount, side-by-side, and French door style refrigerators. Therefore, refrigerator 2 is only presented as exemplary for purposes of explaining the invention.

As is also widely known in the art, fresh food compartment 8 is generally maintained at a temperature above freezing, typically in the range of 35°-40° F. On the other hand, freezer compartment 13 is to be maintained below freezing, i.e., below 32° F. For use in connection with maintaining desired operating temperatures in fresh food compartment 8 and freezer compartment 13, a controller unit 50 is shown mounted in fresh food compartment 8, with controller unit 50 receiving temperature signals from a freezer compartment temperature sensor 52 and a fresh food compartment temperature sensor 54. By way of example, temperature sensors 52 and 54 can be constituted by thermistors. In addition, controller unit 50 establishes an interface for receiving freezer and fresh food compartment set point signals from user controlled selectors 56 and 58, which can take various forms including dials, rotary knobs, buttons and the like. Controller unit 50 is part of an overall refrigeration system 59 including a freezer evaporator 60 located in freezer compartment 13, such as behind a rear or false wall 64 of freezer compartment 13, as will be discussed in more detail below.

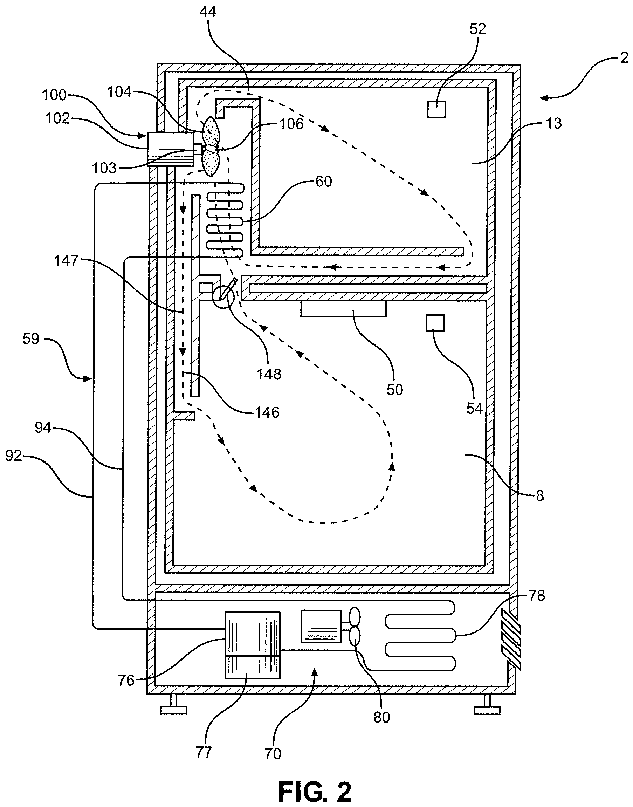

Figure 2 schematically illustrates the location and components of the refrigeration system 59 of refrigerator 2. In the top-mount embodiment depicted, refrigerator 2 includes a lower machine compartment 70 having mounted therein a compressor 76, a compressor motor 77, a condenser 78 and a condenser fan 80. Evaporator 60 is in fluid communication with both compressor 76 and condenser 78 through refrigeration conduits 92 and 94 respectively. Operation of compressor motor 77, which can be operable at variable speeds, causes refrigerant to move through the refrigeration system conduits 92 and 94 in establishing evaporator 60 as a cold source for cooling freezer and fresh food compartments 13 and 8.

In connection with cooling fresh food and freezer compartments 8 and 13, evaporator 60 has associated therewith an evaporator fan 100, including an evaporator fan motor 102 having a drive shaft 103 for driving at least one fan blade 104. In one form, a plurality of fan blades 104 project from a central hub 106. Certainly, various types of fans could be employed, including squirrel cage-type fans with multiple blades. In any case, during operation of evaporator fan motor 102, the fan blade(s) 104 develop a flow of cooling air, including a first stream of cooling air 144 directed within ducting (not labeled) into and then through freezer compartment 13 and a second stream of air 146 within ducting 147 into and then through fresh food compartment 8. The second stream of air 146 is regulated by means of an air baffle 148 which can be variably shifted between fully closed and fully opened positions by controller unit 50. As the details and operation of such a cooling system is known in the art, such as set forth in U.S. Patent No. 6,725,680 which is incorporated herein by reference, further details thereof will not be discussed further herein.

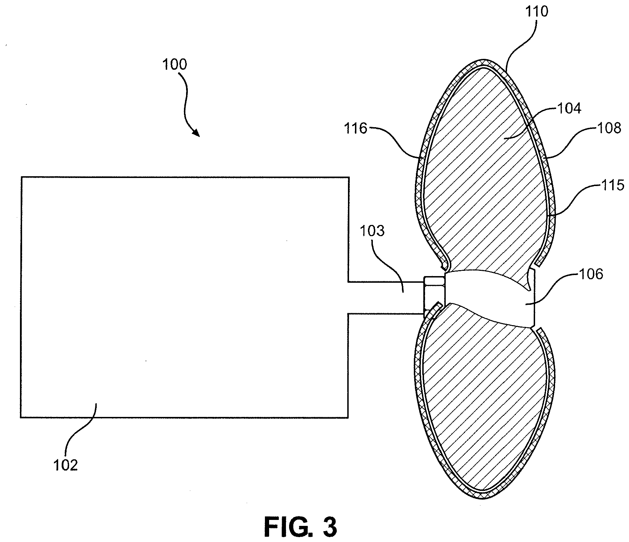

More important in connection with the invention is the inclusion of a hydrophobic coating 108 on at least the fan blade(s) 104 of evaporator fan 100. In the particular embodiment referenced in Figure 3, each fan blade 104 includes an outer surface 110 provided with a hydrophobic coating. More specifically, each fan blade 104 has opposing face surfaces 115 and 116, with face surface 116 being located closer to evaporator motor 102 than face surface 115. In accordance with the invention, it is preferable that both opposing face surfaces 115 and 116, as well as central hub 106, are provided with the hydrophobic coating 108. At this point, it should be noted that, in accordance with the invention, different hydrophobic coatings can be employed and the use of this term includes super hydrophobic coatings. In particular forms of the invention, the coating 108 constitutes or consists of a fluorine-containing chemical, a silane-based chemical or a nano-coating. According to the invention, hydrophobic coating 108 can vary in thickness, preferably in the range of 0.05mm - 0.2 mm and, more preferably, approximately 0.1 mm, with "approximately" meaning plus or minus 20% in accordance with the invention.

In practice, it has been found that providing hydrophobic coating 108 significantly reduces dehydration of food items in the fresh food compartment 8 based on the flow of cooling directed into fresh food compartment 8 from freezer evaporator 60 during operation of the refrigeration system 59. That is, particular to the cases where air used to cool a fresh food compartment comes from a freezer evaporator, i.e., an evaporator used to cool a freezer compartment to below freezing temperatures, the inclusion of the hydrophobic coating operates to reduce dehydration of the food items in the fresh food compartment by limiting the loss of humidity in the cold air supply, thereby avoiding the potential for the extraction of a significant amount of humidity from the stored food items, resulting in food items, particularly fruits, vegetables, meats, various stored leftovers, etc., being preserved longer while retaining favorable appearances, mouth feel, texture and the like.

Although described with reference to preferred embodiments of the invention, it should be readily understood that various changes and/or modifications can be made to the invention without departing from the spirit thereof. For instance, although the at least one evaporator fan blade is specifically coated in accordance with the invention, additional flow structure associated with the cooling air flow for the fresh food compartment could also be coated, such as the overall evaporator and air ducting. In general, the invention is only intended to be limited by the scope of the following claims.

## Claims

1. A refrigerator (2) comprising:
a fresh food compartment (8) and a freezer compartment (13);
a refrigeration system (59) including a freezer evaporator (60) and an evaporator fan (100) configured to direct a flow of air over the freezer evaporator (60) and into the fresh food compartment (8), wherein the evaporator fan (100) includes at least one fan blade (104),
**characterized in that** the at least one fan blade (104) has an outer surface (110) including a hydrophobic coating (108).

2. The refrigerator of claim 1, wherein the hydrophobic coating (108) is in the range of 0.05 mm - 0.2 mm in thickness.

3. The refrigerator of claim 2, wherein the hydrophobic coating (108) is approximately 0.1 mm in thickness.

4. The refrigerator of any one of claims 1-3, wherein the flow of air is directed from the freezer compartment (13) to the fresh food compartment (8) through a duct (147).

5. The refrigerator of claim 4, wherein at least one of the freezer evaporator (60) and the duct (147) is also provided with a hydrophobic coating.

6. The refrigerator of claim 5, wherein each of the freezer evaporator (60) and the duct (147) includes the hydrophobic coating.

7. The refrigerator of any one of claims 1-6, wherein the evaporator fan (100) includes a central hub (106) and a plurality of fan blades (104) projecting from the central hub (106) and each of the plurality of fan blades (104) has opposing face surfaces (115, 116), with each of the face surfaces (115, 116) being coated with the hydrophobic coating (108).

8. A method of reducing dehydration of food items in a fresh food compartment (8) of a refrigerator (2) having a freezer compartment (13) and a fresh food compartment (8), said method comprising the steps of:
• providing a refrigeration system (59) having a freezer evaporator (60) and an evaporator fan (160) with least one fan blade (104);
• providing an outer surface (110) of said at least one fan blade (104) with a hydrophobic coating (108);
• forcing a flow of cooling air over said freezer evaporator (60) by operating the evaporator fan (160) the at least one blade (104) provided with the hydrophobic coating (108); and
• directing the flow of air into at least the fresh food compartment (8) of the refrigerator (2).

9. The method of claim 8, wherein the hydrophobic coating (108) is in the range of 0.05 mm - 0.2 mm in thickness.

10. The method of claim 9, wherein the hydrophobic coating (108) is approximately 0.1 mm in thickness.

11. The method of any one of claims 8-10, wherein the flow of cooling air is directed from the freezer compartment (13) to the fresh food compartment (8) through a duct (147).

12. The method of claim 11, wherein at least one of the freezer evaporator (60) and the duct (147) is also provided with a hydrophobic coating (108).

13. The method of claim 12, wherein each of the freezer evaporator (60) and the duct (147) includes the hydrophobic coating (108).

14. The method of any one of claims 8-13, wherein the evaporator fan (100) includes a central hub (100) and a plurality of fan blades (104) projecting from the central hub (106) and each of the plurality of fan blades (104) has opposing face surfaces (115, 116), with each of the face surfaces being coated with the hydrophobic coating (106).
